# EUROPEAN PATENT APPLICATION

(11) **EP 1 837 813 A1**
(43) Date of publication of application: **26.09.2007**
(21) Application number: 06005288.3
(22) Date of filing: 15.03.2006
(51) Int. Cl.: G06Q 10/00

(54) **System and method for verification of identifiers**

(71) Applicant: SAP AG, 69190 Walldorf (DE)
(72) Inventor: Nochta, Zoltan, 70199 Karlsruhe (DE); Staake, Thorsten, 63571 Gelnhausen (DE)

(57) **Abstract**

A system (100) for verifying an identifier includes an interface unit (110) configured to: receive a request for a verification of the identifier, issue a request for a data subset that is a subset of data describing a representation of the identifier, and receive response data. The system (100) further includes a processing unit (120) configured to access the representation of the identifier, and verify the identifier by checking that the response data are identical to the data subset.

## Description

### Technical Field

The present invention relates to electronic data processing and more specifically to providing security against product counterfeiting.

### Background and Prior Art

In today's economy, a large variety of different products is produced and can be purchased in different ways. Purchasers may be for example consumers or businesses. The purchasers may be able to select a product from a group of products that are produced by different producers. Furthermore, the purchasers may have a choice between different providers of the selected product.

In such an open economy the purchasers may desire to verify the authenticity of products. Products that are not authentic, that is, counterfeited products may be cheaper but may pose a risk to the purchaser. The counterfeited products may be very similar to authentic products but of a lower quality. Examples for products that may be counterfeited are automotive parts, consumer products such as shirts or luxury articles, and drugs.

In case that an authentic producer and a purchaser have established a relationship products may be authenticated by using an identifier. The identifier may be associated to a product of the authentic producer and th e purchaser may have a controlled access to a verification service. In an example, the purchaser may purchase a product and read the identifier that is engraved in the product. The purchaser may have a telephone number to inquire if the identifier that may be unique is used for a product. The purchaser may also have a user and a password to access an internet site of the authentic producer where the identifier can be entered and verified.

### Summary of the Invention

An aspect of embodiments of the invention i s a way to verify an identifier that may be associated to an entity and protect the identifier against guessing by a counterfeiter. Furthermore, the verification of the identifier may be done without controlling an access of parties. As an example, an internet site of an authentic producer may offer to enter and verify identifier s. In such a case, a counterfeiter may be able to find an identifier by guessing identifiers and checking them on the internet site. In case that an identifier has been successful found the counterfeiter may associate counterfeited products with the found identifier. As a consequence, a purchaser may not identify correctly the counterfeited products because the found identifier is verified by the internet site of the authentic producer. The guessing of identifiers is possible because the identifiers are not protected against guessing.

The aspect is addressed in a system for verifying identifiers. The system includes an interface unit and a processing unit. The system protects the identifiers against guessing because the identifier is verified without revealing the identifier. The identifier is verified by requesting information about the identifier that may be answerable when the identifier is know n but that may not reveal the complete identifier. Therefore, the requested information may be guessed by a counterfeiter but may not be sufficient to use as the identifier on a counterfeited product.

The system provides a high level of security compared to a verification of identifiers that does not protect against guessing. Furthermore, the identifiers may be shorter due to the protection against guessing allowing for a faster verification. Shorter identifiers may also be technically easier to associate to entities and technically easier to read for the verification.

The system is disclosed in independent claim 1. Further systems with further features that address the aspect are disclosed in following claims that depend on the independent claim 1.

A further aspect relates to a method that is configured to verify identifiers and protect the identifiers against guessing.

The further aspect is addressed in a method for verifying identifiers. According to the further aspect the method has components that enable the method to verify the identifiers without revealing the identifiers. The method shares desired features such as verification of the identifiers and protecting them against guessing with the desired features of the system for verifying identifiers.

The method is disclosed in independent claim 6. Further methods with further features that address the further aspect are disclosed in following claim depending on independent claim 6.

A further aspect is a program that is configured to cause a computer system to verify the identifiers and protect them against guessing.

The further aspect is addressed in a computer program product that is disclosed in independent claim 11.

### Brief Description of Drawings

Fig. 1 is an exemplary situation including an embodiment.

Fig. 2 is a simplified flow diagram with method steps of an embodiment.

Fig. 3A is a first step of an interaction with an exemplary embodiment.

Fig. 3B is a second step of the interaction with the exemplary embodiment.

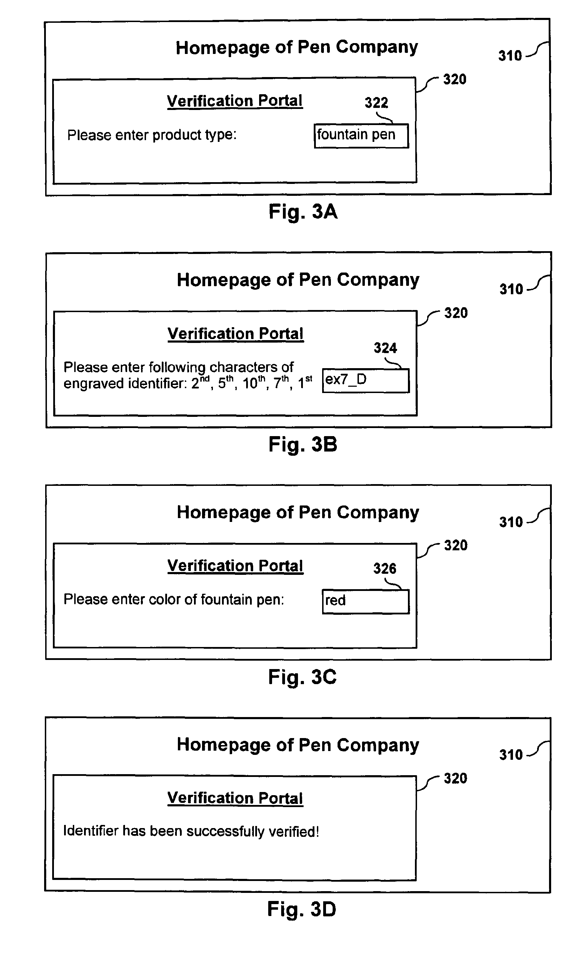

Fig. 3B is a third step of the interaction with the exemplary embodiment.

Fig. 3B is a fourth step of the interaction with the exemplary embodiment.

### Detailed Description of the Invention

The following description of examples includes details for illustrating embodiments and is not intended to limit the scope of embodiments of the invention or to be exhaustive.

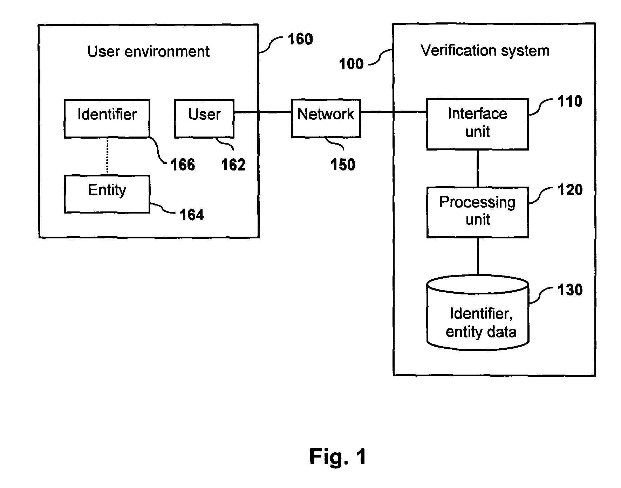

Fig. 1 is an exemplary situation including an embodiment. The embodiment is a system 100 for verifying an identifier. The verification system 100 verifies the identifier and protects the identifier against guessing of the identifier by unauthorized parties. In the figure, there are elements that are linked to each other by a line. Such a line represents a co mmunicative coupling between linked elements. The exemplary situation includes a user environment 160 with a user 162 that may communicate through a network 150 with the verification system 100. The network 150 may be the Internet or a further communication system configured to connect the user to the verification system 100. An example for a further communication sy stem may include a mobile net that can be accessed with a mobile telephone.

The user environment 160 may be a location of the user 162, an entity 164, and an identifier 166 associated with the entity 164. The dotted line between the entity 164 and the identifier 166 represents such an association. The user may for example work in a company that has a sample of the entity, that is, a product. The company may consider purchasing several thousands units of the product and desire to check the authenticity of th e sample. The identifier 166 may be associated with the product by being engraved on the product. In a further example the identifier may be on a sticker attached to the product or a package of the product. In a further example, the entity may also be a co mpact disc with a program or an access to a web service that can be purchased. The identifier may be unique for each sample of the product such as for example th e electronic product code (EPC). The unique identifier may provide a higher level of security than an identifier that is not unique. However, the identifier may also be identical for a plurality of samples of the product.

The user may have a computer system, for example, a personal computer to access the Internet using a web browser. The user may have an internet address of a web page to verify the identifier. The inter net address may be associated with the entity or be provided to the user with the sample product.

The verification system 100 may be for example a computer system configured to run computer programs or an application server for running application programs. The verification system may also include a plurality of computer systems, application servers, or databases. The verification system may be owned by a producer of products or by a service provider that offers a verification of identifiers associated to products of one or more producers. Furthermore, it may be that the verification system includes a server of a service provider for communicating with a user and a server of a produc er for processing computations and accessing identifiers. In such an embodiment of the verification system the producer may outsource a communication with a user or a purchaser to an external service provider without reveal ing the identifiers to the external service providers.

The system includes an interface unit 110 that is configured to receive a request for a verification of the identifier. In the example, the interface unit 110 is connected to the network 150 that may for example be identical with the Internet. The interface unit 110 may include providing a web service that can be accessed through the Internet and that may verify identifiers. In the example, the interface unit hosts a web page that offers the web service. The interface unit may provide a graphical user interface for the user. The user can enter data through the graphical user interface and be provided with specific information according to entered data. The interface unit may include an access control but may also be open to any person accessing the web page. The user may enter the web page and enter in a specified field a product type of the product. The interface unit receives the product type and identifies the product type as the request for the verification of an identifier of the product. The interface unit 110 is linked to a processing unit 120 and transfers data of the request to the processing unit 120.

The verification system includes the processing unit 120 that is configured to access a representation of the identifier. This may include searching in a database 130 for the representation of the identifier 166 associated to the entity 164. Finding the identifier in the database may require additional information such as the color of the product or a product name. However, it may be that the combination of the web page and the product type may be sufficient to identify unambiguously the identifier in the database.

The processing unit may be further configured to determine a data subset that is a subset of data describing the representation of the identifier. The representation of the identifier may for example be a string of ten characters. The data describing the representation are the ten characters and a subset may for example be the characters three to seven of the data. In a further example, the representation of the identifier may be the binary representation of the ten characters according to the American standard code for information interchange (ASCII). A subset may then include every fifth bit of the binary representation. The processing unit may determine the data subset each time that the identifier is accessed. In a further example, the processing unit may store a determined data subset and use it for example for a specific period of time or for a specific number of times.

In the example, the processing unit may determine the data subset by a substantially random selection of data elements of the data describing the representation. The substantially random selection of data elements may be achieved by using a standard pseudorandom number generator such as Blum Blum Shub, ISAAC or lagged Fibunacci generators. A total number of selected data elements may vary. For example, it may be that a data element is a character of the ten characters and according to a pseudorandom numb er generator four characters of the ten characters are selected for the data set. The characters may not be ordered allowing for more possible combinations. Using a pseudorandom number generator has an advantage that the data sets may be difficult to guess and make it difficult to guess the identifier from one or more guessed data sets. In a further example, the data subset may be determined so that the data subset identifies the identifier unambiguously.

The interface unit is configured to issue a request for the data subset, that is, to use the user interface to display the request for the data subset. The user interface may be for example a graphical user interface or a voice user interface that communicates with the user through a generated voice. The data subset is described so that the user knowing the identifier can determine response data and enter the response data through the interface.

The interface unit is configured to receive the response data and transfer the response data to the processing u nit.

The data of the data subset may describe more than one identifier stored in the database 130. In such a case the interface unit may be configured to issue a request for supplement data that are related to the identifier and receive supplement response data. The supplement data may be determined from entity data that describe features of the entity 164 such as color of the entity or version of the entity. In the example, the entity data can be searched in the database 130 using the identifier and in th is way the entity data are related to the identifier. The supplement data may be determined so that the data subset and the supplement data identify the identifier unambiguously according to the data of the database. The user may read the request for the supplement data and enter the supplement response data accordingly.

The processing unit is configured to verify the identifier by checking that the response data are identical to the data subset. In case that the user has entered the supplement response da ta the processing unit may be further configured to access the supplement data and verify the supplement response data. This may be done by checking that the supplement response data are identical to the stored supplement data related to the identifier.

In the example, the interface unit is further configured to issue a further request for the data subset in case that the response data are no t identical to the data subset. In other words, the user has entered response data that are not verified and is prov ided with the further request to enter the data subset. However, the further request is issued following a delay of a predetermined period of time. The predetermined period of time may be constant or may increase with each entering of response data that ar e not verified. As an example, the period of time may star t with one second following the first time of entering false response data and may be doubled following each further entering of false response data. In such a way, a party guessing the data subset may be discouraged to try many times to guess the data subset.

The processing unit can apply different criteria for checking that the response data are identical with the data subset. In an example of a data subset including characters the processing unit may ignore a difference between upper case characters and lower case characters. In other words, an upper case character may be identified with the lower case character. In a further example, the processing unit may make a difference between upper case cha racters and lower case characters. Similarly, the processing unit may apply different criteria for checking that the supplement response data are identical to the supplement data.

In case that the communication with the user is outsourced to an external service provider the external service provider may be provided by the producer with the data subsets. In this way the external service provider may not get to know the identifier and may not be able to give the identifier to an unauthorized party. The data subsets may be changed frequently, for example every day, so that the data subsets are outdated after a short period of time.

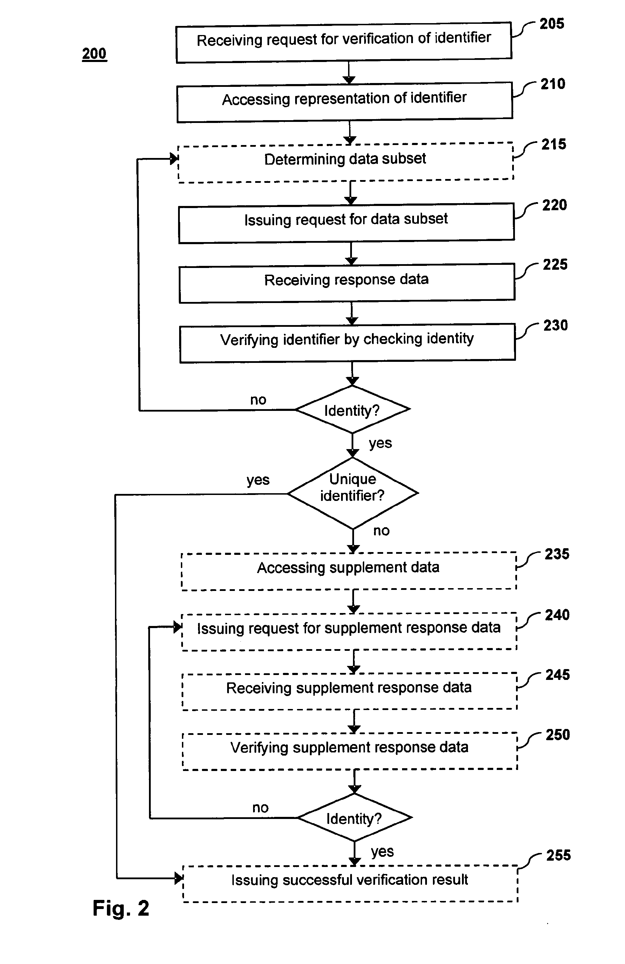

Fig. 2 is a simplified flow diagram with method steps of an embodiment. The embodiment is a computer-implemented method 200 for verifying the identifier. Method steps, that is, operations of the method 200 may be executed in a further order differing from the order of the displayed flow diagram. Optional operations of the method 200 are represented as boxes with dashed lines.

The method includes method steps receiving 205 the request for the verification of the identifier. The request may have been entered by a user through the Internet. The user may have navigated to internet page and pressed a button for creating the request. In a further example, the request may have been created by an automated system that reads identifiers associated to entities and requests verification of the read identifiers using a web service.

The method includes accessing 210 the representation of the identifier for example by searching in a database for the identifier. The data for searching the identifier may be a portion of the request and may include product type and product name of the entity.

The method includ es an optional method step determining 215 the data subset prior to issuing the request for the data subset. In the example, determining the data subset includes the substantially random selection of data elements of the data describing the representation.

It may follow issuing 220 the request for the data subset so that the user can read it and receiving 225 response data that the user may have determined and entered. In a further example, the automated system may receive the request for the data subset and send the response data accordingly.

The method includes verifying 230 the identifier by checking that the response data a re identical to the data subset. In case that the response data are not identical to the data subset it may follow issuing a further request for the data subset. However, the further request may be issued following the delay of the predetermined period of time.

In case that the response data are identical to the data subset it may follow a check if the identifier is unambiguously identified by the data subset, that is, if the response data describe a unique identifier. In case of a positive answer the identifier has been successfully identified and the method includes issuing the result.

In case of a negative answer it may be for example that two identifiers in the database can be identified with the data subset. In other words the response data are identical to the data subset of the identifier and a data subset of a further identifier. In such a case it may follow acc essing 235 the supplement data. The supplement data are related to the identifier through data sets of the database. The method may include issuing 240 a request for the supplement data, receiving 245 the supplement response data, and verifying 250 the supplement response data. Verifying 250 the supplement response data may include checking that the supplement response data are identical to the supplement data.

In case that the supplement response data are not identical to the supplement data it may follow issuing a further request for the supplement response data. The further request may be also delayed for a predetermined period of time so that counterfeiters may be discouraged from entering many supplement response data. In case that the supplement response data are not identical to the supplement data it may follow issuing the successful verification result so that the user is informed that the entity passed the authentication test.

Fig. 3A is a first step of an interaction with an exemplary embodiment. The exemplary embodiment may for example be the verification system 100 (see Fig. 1). The interface unit of the verification system may be configured to provide an Internet page, that is, the homepage 310 of a company producing pens, the Pen company. A verification portal 320 may be a portion of the homepage.

A user may have access to a fountain pen and may be interested in buying the fountain pen. The fountain pen is produced by the Pen company and on a package of the fountain pen is a reference to a product authentication service that can be accessed from the home page. Therefore, the user uses a web browser to access the homepage and is provided with the verification portal 320. Furthermore, the user is provided with a field 322 for entering the product type of the product that is intended to be checked for authenticity. Accordingly, the user enters the product type fountain pen as is written on the package of the fountain pen. The entering of the product type is received by the interface unit as a request for verifying an identifier.

Fig. 3B is a second step of the interaction with the exemplary embodiment. The embodiment, that is, the verification system has accessed the identifier, determined the data subset and in the second step issues the request for the data subset. In the example, the engraved identifier may be "DeLuxe_1976" being identical with the representation of the identifier. The characters of the data subset may have been determined by substantially randomly selecting five characters of the identifier. This may have been achieved by using the Blum Blum Shub generator of pseudorandom numbers. In this way the subset is determined to consist of the 2nd, 5th, 10th, 7th, and 1st character of the identifier. According to the request that user enters the characters "ex7_D" in field 324 of the verification port al.

Fig. 3B is a third step of the interaction with the exemplary embodiment. The verification system has checked that the received response data "ex7_D" are identical to the data subset and therefore verified the identifier. However, the system has also computed that there is a further identifier with a further data subset that consists also of the characters "ex7_D". Accordingly, processing unit of the verification system has accessed the color of the fountain pen from the entity data of the database as supplement data. In the third step the interface unit is issuing the request for the supplement data and the user accordingly enters "red" in a field 326.

Fig. 3B is a fourth step of the interaction with the exemplary embodiment. The interface system has re ceived the supplement response data, that is, the color of the fountain pen and verified that "red" is identical to the supplement data from the database. Therefore, the interface unit issues in the fourth step the successful verification result to inform the user about the authenticity of the product as far as the verification system can check it.

As noted above, an embodiment includes a computer program product. The computer program product may be stored on computer -readable media for carrying or having computer-executable instructions or data structures. Such computer-readable media may be any available media that can be accessed by a general purpose or special purpose computer. By way of example, such computer-readable media may include RAM, ROM, EPROM, EEPROM, CD-ROM or other optical disk storage, magnetic disk storage or other magnetic storage devices, or any other medium that may be used to carry or store desired program code in the form of computer -executable instructions or data structures and which can be accessed by a general purpose or special purpose computer. When information is transferred or provided over a network or another communications connection (either hardwired, wireless, or a combination of hardwired or wireless) to a computer, the co mputer properly views the connection as a computer-readable medium. Thus, any such connection is properly termed a computer-readable medium. Combinations of the above are also to be included within the scope of computer -readable media. Computer-executable instructions include, for example, instructions and data which cause a general purpose computer, a special purpose computer, or a special purpose processing device to perform a certain function or group of functions. Furthermore, computer-executable instructions include, for example, instructions that have to be processed by a computer to transform the instructions into a format that is executable by a computer. The computer -executable instructions may be in a source format that is compiled or interpreted t o obtain the instructions in the executable format. In case that the computer -executable instructions are transformed, a first computer may for example transform the computer-executable instructions into the executable format and a second computer may exec ute the transformed instructions.

One embodiment is described in a general context of method steps which may be implemented by a computer program product. The computer program product may include computer-executable instructions, such as program code, executed by computers in networked environments. Generally, program modules include for example routines, programs, objects, components, or data structures that perform particular tasks or implement particular abstract data types. Computer-executable instructi ons, associated data structures, and program modules represent examples of program code for executing steps of the methods disclosed herein. The particular sequence of such executable instructions or associated data structures represents examples of corres ponding acts for implementing the functions described in such steps.

Embodiments of the invention may be operated in a networked environment using logical connections to one or more remote computers having processors. Logical connections may include for example a local area network (LAN) and a wide area network (WAN). The examples are presented here by way of example and not limitation. Such networking environments are commonplace in office -wide or enterprise-wide computer networks, intranets and the Internet. Those skilled in the art will appreciate that such network computing environments will typically encompass many types of computer system configurations, including personal computers, hand -held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

## Claims

1. A system (100) for verifying an identifier, comprising:
an interface unit (110) configured to receive a request for a verification of the identifier, issue a request for a data subset that is a subset of data describing a representation of the identifier, and receive response data; and
a processing unit (120) configured to access the representation of the identifier, and verify the identifier by checking that the response data are identical to the data subset.

2. The system of claim 1 wherein the processi ng unit (120) is further configured to determine the data subset.

3. The system of claim 1 or 2 wherein the processing unit (120) is configured to determine the data subset by a substantially random selection of data elements of the data describing the repr esentation.

4. The system of any one of the claims 1 to 3 wherein the interface unit (110) is further configured to issue a request for supplement data that are related to the identifier and receive supplement response data and the processing unit (120) is further configured to access the supplement data and to verify the supplement response data by checking that the supplement response data are identical to the supplement data, in case that the response data are identical to the data subset of the identifier and a data subset of a further identifier.

5. The system of any one of the claims 1 to 4 wherein the interface unit (110) is configured to issue a further request for the data subset in case that the response data are not identical to the data subset, where in the further request is issued following a delay of a predetermined period of time.

6. A computer-implemented method (200) for verifying an identifier, comprising:
receiving (205) a request for a verification of the identifier;
accessing (210) a representation of the identifier;
issuing (220) a request for a data subset that is a subset of data describing the representation of the identifier;
receiving (225) response data; and
verifying (230) the identifier by checking that the response data are identi cal to the data subset.

7. The method of claim 6 further determining (215) the data subset prior to issuing the request for the data subset.

8. The method of claim 7 wherein determining (215) the data subset comprises a substantially random selection of data elements of the data describing the representation.

9. The method of any one of the claims 6 to 8 further accessing (235) supplement data related to the identifier, issuing (240) a request for the supplement data, receiving (245) supplement response data, an d verifying (250) the supplement response data by checking that the supplement response data are identical to the supplement data, in case that the response data are identical to the data subset of the identifier and a data subset of a further identifier.

10. The method of any one of the claims 6 to 9 further issuing a further request for the data subset in case that the response data are not identical to the data subset, wherein the further request is issued following a delay of a predetermined period of time.

11. A computer program product comprising instructions that are configured to be executable by a processing unit of a computer system and cause the computer system to perform a method of any one of the claims 6 to 10.

## Amended claims

### Amended claims in accordance with Rule 86(2) EPC.

**1.** A system (100) for verifying an identifier, comprising:
an interface unit (110) configured to receive a request for a verification of the identifier, issue a request for a data subset, the data subset being a subset of a representation of the identifier, and receive response data; and
a processing unit (120) configured to access the representation of the identifier, and verify the identifier by checking that the response data are identical to the data subset.

**2.** The system of claim 1 wherein the processing unit (120) is further configured to determine the data subset.

**3.** The system of claim 1 or 2 wherein the processing unit (120) is configured to determine the data subset by a substantially random selection of data elements of the data describing the representation.

**4.** The system of any one of the claims 1 to 3 wherein the interface unit (110) is further configured to issue a request for supplement data, the supplement data being related to the identifier and receive supplement response data and the processing unit (120) is further configured to access the supplement data and to verify the supplement response data by checking that the supplement response data are identical to the supplement data, in case that the response data are identical to the data subset of the identifier and a data subset of a further identifier.

**5.** The system of any one of the claims 1 to 4 wherein the interface unit (110) is configured to issue a further request for the data subset in case that the response data are not identical to the data subset, wherein the further request is issued following a delay of a predetermined period of time.

**6.** A computer-implemented method (200) for verifying an identifier, comprising:
receiving (205) a request for a verification of the identifier;
accessing (210) a representation of the identifier;
